# DEMANDE DE BREVET EUROPEEN

(11) **EP 3 840 142 A1**
(43) Date de publication de la demande: **23.06.2021**
(21) Numéro de dépôt: 20154385.7
(22) Date de dépôt: 29.01.2020
(51) Int. Cl.: H02B 1/20, H02B 1/24, H02B 1/32, H02B 1/42

(54) **AUTOMATISATION DE LA FABRICATION DE TABLEAUX ÉLECTRIQUES AU TRAVERS D'UN PROCESSUS IDENTIFIÉ**

(71) Demandeur: Bogaert, Renaud, 7100 La Louvière (BE); Agostini, Vittorio, 1410 Waterloo (BE); Bogaert, Pierre, 1040 Etterbeek (BE); Occhilupo, Andrea, 1120 Bruxelles (BE)
(72) Inventeur: BOGAERT, Renaud, 7100 La Louvière (BE); AGOSTINI, Vittorio, 1410 Waterloo (BE)
(74) Mandataire: Office Kirkpatrick

(57) **Abrégé**

La présente invention concerne le domaine des installations électriques et en particulier l'automatisation de la fabrication de tableaux électriques adaptés à leur environnement. Les composants des tableaux électriques de l'invention sont organisés dans des cellules distinctes selon qu'ils sont alimentés par un courant fort ou un courant faible. Les composants sont sélectionnés et organisés selon leur fonction et la famille d'équipement qu'ils gèrent ou alimentent, de façon identifiée. Cela permet l'intervention simplifiée et en toute sécurité d'un opérateur sur le tableau, même non-qualifié.

## Description

La présente invention concerne le domaine des installations électriques et en particulier l'automatisation de la fabrication de tableaux électriques adaptés à leur environnement.

Un tableau électrique traditionnel regroupe une pluralité de composants électriques, en ligne, sans logique particulière contrôlant le fonctionnement de tous les différents équipements d'une installation électrique, indifféremment de leur distance au tableau.

Par équipement, il faut comprendre un appareil ou un groupe d'appareils de même type destinés à être raccordé au réseau électrique, comme par exemple un groupe de lampes (équipement éclairage), un radiateur ou un groupe de radiateur, un chauffe-eau, une machine industrielle, un four, une chambre froide, etc..., éventuellement lié à un local particulier (éclairages dans une pièce).

Par composants électriques, il faut comprendre l'ensemble des composants formant l'interface entre le réseau électrique et l'équipement tels que les disjoncteurs, les systèmes de sécurité, les unités de gestion micro contrôlées comme les automates programmables industriels, les interfaces entrées-sorties... Ces composants peuvent être regroupés en deux grands objets, ou fonctions : la gestion et la puissance, bien connues de l'homme du métier.

Par partie gestion, il faut comprendre, dans un schéma électrique, la partie qui sert à donner l'ordre, éventuellement en fonction d'un retour de certains capteurs ou sondes. Elle permet par exemple d'activer ou d'éteindre la partie puissance. Cette partie incluent notamment la commande, la régulation, les systèmes de mesures qui permettent de piloter des actionneurs, etc...

Par partie puissance, il faut comprendre, dans un schéma électrique, la partie qui permet d'acheminer la puissance vers le récepteur électrique. Elle comprend également les fonctions de sécurité et de dérogation.

Ainsi, cette centralisation de la gestion et de la puissance nécessite alors une multitude de câbles de longueurs importantes pour connecter le tableau aux équipements ou à leurs composants sur le terrain. Cela complexifie l'installation, regroupant tous les composants électriques au même endroit, rendant l'identification d'un problème ou l'intervention sur un composant particulier difficile.

Par ailleurs, les nombreux câbles de grande longueur nécessaires pour une installation électrique traditionnelle coûtent excessivement cher et conduisent à des pertes énergétiques inutiles proportionnelles à la longueur et au nombre de câbles.

De plus, un tableau électrique traditionnel est prévu pour comprendre 25% de place libre pour éventuellement ajouter ultérieurement d'autres composants. Cela limite ainsi fortement sa flexibilité au cas où l'installation électrique doit être étendue.

Enfin, les tableaux électriques traditionnels sont conçus de manière plane (ou en deux dimensions) et résultent en une perte de place supplémentaire. Par plane, il faut comprendre que chaque composant est à côté d'un autre, tous les fils sont connectés par l'arrière du tableau, et la profondeur de celui-ci n'est ainsi jamais exploitée.

Dans l'optique de pallier ces problèmes, la demanderesse a jugé nécessaire de proposer un tableau électrique et une méthode pour le fabriquer et l'installer permettant de réduire conséquemment la longueur de câbles nécessaire, de simplifier l'installation électrique, de faciliter l'intervention des différents corps de métier, de gagner en place et donc de réduire les coûts d'installation et de la consommation énergétique.

### Solution de l'invention

A cette fin, l'invention concerne un tableau électrique pour raccorder au moins un équipement à un réseau électrique comprenant :
- une cellule de puissance comprenant au moins un composant électrique de transport de l'énergie électrique vers l'équipement,
- si nécessaire, une cellule de gestion comprenant au moins un composant électrique de transport d'un signal d'information, et
- au moins une cellule de raccordement comprenant des ports de connexion de l'équipement aux composants du tableau lui correspondant.

De préférence, la cellule de puissance est distante ou séparée de la cellule de gestion, c'est-à-dire qu'il existe un espacement entre les deux.

Par cellule, il faut comprendre un module, ou secteur ou partie du tableau électrique clairement séparé(e) des autres modules, secteur ou parties et comprenant un ou plusieurs composants associés à une fonction particulière. Une cellule est un boitier, de préférence refermable par un couvercle, contenant un rail sur lequel peuvent être fixés un ou plusieurs composants électriques. Contrairement aux tableaux électriques classiques ou tous les composants d'une multitude d'équipements sont disposés sans ordre particulier, le tableau électrique de l'invention cherche à instaurer une logique de câblage, qui est beaucoup plus intuitive.

De préférence le tableau comprend deux cellules de raccordement.

Par composant électrique de transport de l'énergie électrique vers l'équipement il faut comprendre un composant dont le but est de participer à l'acheminement de l'énergie nécessaire au fonctionnement de l'équipement, c'est-à-dire la fonction de puissance, comme par exemple un contacteur de puissance, un disjoncteur de puissance...

La cellule de puissance contient par exemple les composants fonctionnant en régime de courant fort (disjoncteurs, système de sécurité...), la cellule de gestion comprend par exemple les composants fonctionnant en régime de courant faible tels que l'électronique de contrôle) et les cellules de raccordements comprennent par exemple des ports de connexion entre un équipement et les composants du tableau lui correspondant.
L'électronique de contrôle désigne ici notamment des unités de gestion micro contrôlées (UGM) que l'on peut appeler « communicantes » (UGMC). Cette appellation peut désigner les Automate Programmable Industriel ou API, les unités de gestion locale ou UGL. L'électronique de contrôle peut également désigner les interfaces entrées-sorties, les systèmes de mesures, mais n'est pas limitatif du secteur d'activité et peut s'appliquer aussi bien aux bâtiments, aux industries, aux infrastructures......

Par courant fort, il faut comprendre le courant ayant pour fonction de transporter l'énergie électrique dans le réseau. Dans le tableau électrique de l'invention, il s'agit du courant transportant l'énergie depuis l'alimentation électrique en amont du tableau vers l'équipement en aval.

Par courant faible, il faut comprendre le courant ayant pour but de transmettre un signal d'information ou de commande.

Par composant électrique de transport d'un signal d'information il faut comprendre un composant dont le but est de participer à la transmission d'un signal d'information ou de commande dont le contenu influence la commande de la puissance, c'est-à-dire une fonction de gestion. Ce composant n'est pas lié directement à la transmission de l'énergie électrique vers l'équipement, mais est par exemple une unité de gestion micro contrôlée, un relais de commande... Le signal d'information provient par exemple de capteurs, comme des sondes de températures, d'humidité, de pression, ou des commandes informatiques externes, etc...

De préférence, les ports de connexion ou de raccordement sont placés sur une face latérale de la cellule de raccordement, afin d'être accessibles facilement. Par face latérale on entend une face qui n'est ni la face avant, généralement dédiée au couvercle de la cellule, ni la face arrière, généralement destinée à être orientée vers le mur sur lequel est fixé le tableau électrique.

Avantageusement, les cellules de puissance et de gestion sont séparées par les cellules de raccordement, placées parallèlement l'une à l'autre avec les ports de connexion orientés vers un espace central, permettant un accès facile aux ports de connexion.

De préférence, les cellules de raccordement sont moins profondes que les autres cellules afin que le tableau puisse être installé sur un chemin de câble passant derrière celles-ci.

De préférence, les composants électriques à l'intérieur des cellules peuvent être montés à côté les uns des autres mais également dans la profondeur du tableau l'un derrière l'autre afin de réduire la place prise par le tableau électrique. A cette fin, les composants électriques peuvent être montés sur rail pour en faciliter l'accès lors d'une intervention d'un professionnel. Dans ce cas, les composants peuvent être superposés, dos à dos, en quinconce de façon à ce que les câbles de connexion s'intercalent en un faisceau unique, afin d'optimiser l'espace.

Chaque composant électrique dans le tableau peut être identifié, par exemple étiqueté, avec un texte ou un code, et/ou associé à un code couleur. Un code couleur peut également être attribué aux câbles et/ou aux ports de raccordement correspondant à chaque type de signal afin d'intégrer la connaissance dans le tableau. Le technicien voit donc son travail facilité et le risque d'erreur diminuer.

Les câbles de connexion entre les cellules peuvent être de longueurs standardisées afin de faciliter le branchement du tableau électrique de l'invention. Le technicien peut ainsi apporter des câbles prédécoupés lors de l'installation et ne doit donc pas les découper sur place. Par longueur standardisée, on signifie ici qu'une pluralité de câbles prédécoupés à une longueur unique ou un faible de nombre de longueurs identiques permet de réaliser toutes les connections dans le tableau. Cette longueur standardisée s'oppose à la pratique actuelle ou l'opérateur doit ajuster à chaque raccordement d'équipement la longueur du câble nécessaire.

Le tableau électrique peut être pré-équipé avant installation afin de faciliter le montage de celui-ci et de diminuer le niveau d'expertise nécessaire à son installation.

Les cellules peuvent être en plastique de type polycarbonate, afin d'obtenir une meilleure résistance aux U.V. et d'être transparentes pour permettre un diagnostic de premier niveau plus facile, en métal pour une meilleure résistance mécanique (dans ce cas la séparation des cellules permet d'éviter d'éventuelles perturbations magnétiques évitant les risques de dysfonctionnement) ou en tout autre matériau jugé approprié par l'homme du métier.

De préférence, les cellules sont équipées d'un capot permettant une résistance aux chocs et/ou à la pluie, et protégeant l'intérieur des cellules de la poussière. De préférence encore, le capot de la cellule placée en haut du tableau électrique est plus profonde de manière à offrir une protection supplémentaire contre la pluie pour le bas du tableau en formant une protubérance au-dessus des autres cellules.

L'invention porte également sur une installation électrique dans un bâtiment comprenant au moins deux tableaux électriques selon l'invention. Les tableaux peuvent être raccordés suivant deux principes de raccordement : le raccordement par « force motrice distribuée » (ou FMDB) ou le raccordement par « force motrice directe » (ou FMDR). Par force motrice distribuée, il faut comprendre qu'un unique disjoncteur situé en amont protège plusieurs tableaux raccordés en série (une protection pour une série de tableaux). Par force motrice directe, il faut comprendre que chaque tableau raccordé suivant ce principe est protégé par un disjoncteur (une protection par tableau).

Il est de plus revendiqué l'utilisation du tableau électrique de l'invention dans une installation électrique d'un bâtiment.

L'invention concerne en outre un procédé de raccordement électrique d'un équipement comprenant les étapes de :
- on raccorde les fonctions de puissance de l'équipement à ses composants de transport de l'énergie électrique situés dans une première zone ou cellule de puissance d'un tableau électrique,
- on raccorde les fonctions de gestion de l'équipement à ses composants de transport d'un signal d'information ou de commande situés dans une seconde zone, ou cellule de gestion, du même tableau électrique,
les raccordements s'effectuant via au moins une zone ou cellule de raccordement distincte des zones de puissance et de gestion.

De préférence, le tableau électrique se situe à proximité de l'équipement.

Par à proximité, il faut comprendre une distance inférieure à 20 mètres, de préférence inférieure à 15 mètres et de préférence encore inférieure à 10 mètres. L'intérêt de cette proximité est de réduire les longueurs de câble nécessaire à l'installation de l'équipement et de faciliter l'identification des composants électriques de l'équipement.

De plus, l'invention porte sur un procédé de raccordement électrique d'au moins deux équipements, dans un bâtiment, selon lequel les équipements sont raccordés à plusieurs tableaux électriques selon le procédé précédent.

Enfin, l'invention porte sur une méthode de fabrication d'un tableau électrique pour raccorder les équipements d'une installation, le tableau électrique comprenant au moins une cellule de puissance, une cellule de gestion et une cellule de raccordement, comprenant les étapes de :
- on détermine les informations techniques nécessaires au raccordement du tableau électrique à l'installation,
- on identifie et on catégorise les équipements à connecter au tableau électrique par famille selon une nomenclature de familles déterminée en fonction du type d'installation pour établir une liste de familles d'équipements à raccorder,
- on identifie les fonctions (ou objets) de gestion des équipements liées à chaque famille de la liste de familles, pour établir une liste de fonctions à raccorder,
- on implante chaque fonction de gestion de façon organisée dans une cellule de gestion du tableau électrique,
- on détermine les composants de de transport de l'énergie électrique vers les équipements nécessaires au raccordement des équipements et on les installe dans une cellule de puissance du tableau électrique,
- on établit les connections électriques appropriées entre les fonctions de gestion, les composants de de transport de l'énergie électrique vers les équipements et les ports de raccordement compris dans la cellule de raccordement.

Les informations techniques nécessaires au raccordement du tableau électrique à l'installation comprennent par exemple le type d'alimentation électrique disponible, la localisation du tableau, les spécifications techniques particulières souhaitées par le client ou rendues nécessaires par l'implantation du bâtiment, les normes en vigueur, etc....

Avantageusement, on identifie les fonctions (ou objets) de gestion des équipements liées à chaque famille de la liste de familles selon une nomenclature de fonctions déterminée pour chaque famille, pour établir une liste de fonctions à raccorder.

Avantageusement encore, on implante chaque fonction de gestion de façon organisée dans une cellule de gestion du tableau électrique de manière à former des modules, chaque module correspondant à une fonction d'une famille.

Le tableau électrique de l'invention ainsi que la méthode de fabrication et la méthode de raccordement des tableaux selon l'invention permettent d'agencer l'installation électrique afin d'économiser entre 40 et 60% de câble. Cela permet également de simplifier l'installation électrique et de la rendre beaucoup plus intuitive, de faciliter l'intervention d'un professionnel en lui permettant d'identifier facilement le tableau électrique correspondant à son corps de métier ou encore de pouvoir étendre l'installation électrique sans limite et sans devoir nécessairement couper l'alimentation générale pour éviter tout risque d'électrisation.
De plus, la séparation des cellules de puissance et de gestion permet d'isoler les composants fonctionnant en régime de courant fort des composants fonctionnant en régime de courant faible, respectivement placés dans les cellules de puissance et de gestion. Cela permet ainsi, pour l'homme du métier, lors d'une intervention dans le tableau, d'être assuré de différencier la partie de tableau directement électriquement dangereuse (i.e. la partie en régime de courant fort où les courants et potentiellement les tensions (par exemples, les basses tensions, entre 50 et 1000VAC et entre 120 et 1500VDC) élevés peuvent occasionner des blessures sévères ou la mort à un humain par électrisation) de la partie où le régime de courant n'est plus directement mortellement dangereux pour un humain (i.e. le régime de courant faible, où l'on retrouve également potentiellement des tensions moins élevées, comme par exemple les très basses tensions inférieures à 50VAC ou 120VDC).

L'invention sera mieux comprise à l'aide de la description suivante d'une forme de réalisation de l'invention, en référence aux figures en annexe sur lesquelles :
- La figure 1 est un schéma d'un tableau électrique de l'art antérieur pour commande d'un chauffe-eau,
- la figure 2 est un schéma d'un tableau électrique selon l'invention pour commande d'un circuit de chauffage,
- la figure 3 illustre la vue de droite du tableau électrique de la figure 2,
- la figure 4 illustre le procédé de fabrication d'un tableau électrique selon l'invention,

Les équipements peuvent être classifiés par famille et par fonction selon une nomenclature définie. Chaque famille peut par exemple être associée à un corps de métier particulier, ou poursuivre un objectif technique commun, tandis que les fonctions regroupent de manière plus précise les équipements ou groupe d'équipements ayant un fonctionnement spécifique. Par exemple, le tableau ci-dessous regroupe les familles et fonctions dans un bâtiment :

**Tableau 1**

| | |
|---|---|
| 1. Production de chaleur | 1. Chaudière(s) |
| | 2. Pompe à Chaleur (PAC) |
| | 3. Co-génération |
| | 4. Géothermie |
| | 5. Panneaux solaires |
| | 6. Production urbain |
| | 7. Collecteur de chaud avec pompe |
| | 8. Collecteur de chaud avec bouteille casse pression |
| 2. Circuits de chauffage | 1. Circuits de chauffage |
| 3. Eau-chaude sanitaire | 1. Mono-énergie |
| | 2. Bi-énergie |
| | 3. Multi-énergie |
| 4. Production de froid | 1. Groupe de froid monobloc |
| | 2. Groupe de froid avec refroidisseur à sec |
| | 3. Groupe de froid avec tour de froid ouverte |
| | 4. Groupe de froid avec tour de froid fermée |
| | 5. Groupe de froid avec tour hybride |
| | 6. Collecteur de froid avec pompe |
| 5. Circuits de refroidissement | 1. Circuits de refroidissement |
| 6. Traitement de l'air | 1. Recyclage total |
| | 2. Recyclage partiel |
| | 3. Recyclage partiel Groupe de Pulsion (GP) |
| | 4. Recyclage partiel Groupe d'extraction (GE) |
| | 5. Air frais |
| | 6. Divers |
| 7. Automatisation de la pièce | 1. Unité ventilo-convecteur |
| | 2. Radiateurs |
| | 3. Plafond rafraîchissant |
| | 4. Traitement d'air |
| | 4.1 Volume d'air constant - variable (CAV - VAV) |
| | 4.2 Convecteur |
| | 5. Batteries terminales |
| 8. Divers | 1. Récupération variable (simple ligne) |
| | 2. Reprises des compteurs (électricité, énergie) - Impulsion |
| | 3. Récupération variable (avec protocole de communication) |
| | 3.1 Interface Modbus |
| | 3.2 Interface M-BUS |
| | 3.3 Intégration Bacnet/MSTP |
| | 3.4 Intégration Bacnet/IP |
| | 3.5 Interface OPC |
| | 3.6 Autre interface |
| 9. Gestion Technique Centralisée (GTC) | 1. Web |
| | 2. Gestion technique centralisée (GTC) |
| | 3. Nihil |
| | 4. Divers |

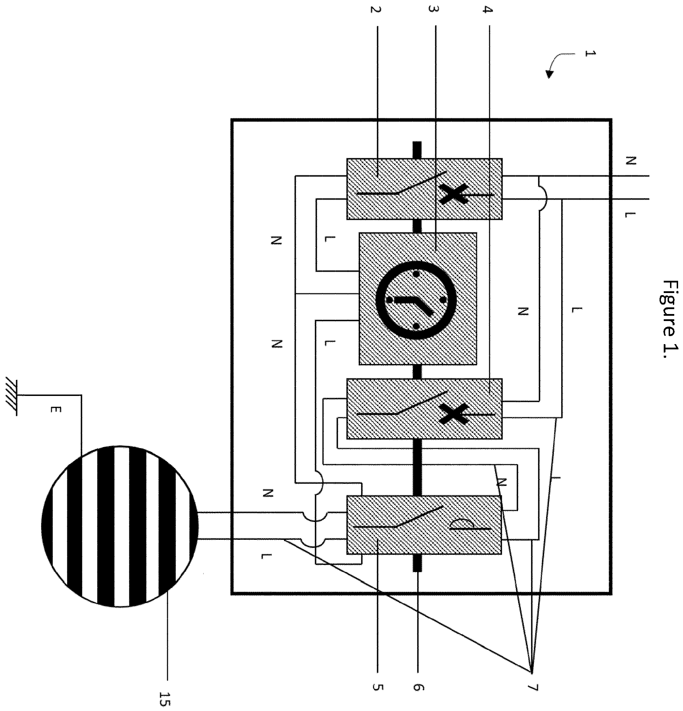

En référence à la figure 1, un tableau électrique 1 de l'art antérieur pour commande d'un chauffe-eau 15 comprend un disjoncteur deux ampères 2 de protection d'un programmateur 3, un disjoncteur de puissance vingt ampères 4, un contacteur de puissance vingt ampères 5 ainsi qu'un rail 6 permettant de fixer l'ensemble des précédents composants électriques 2,3,4 et 5 dans le tableau 1. L'ensemble des composants électriques 2,3,4,5 sont raccordés par un ensemble de câbles 7. L'alimentation électrique (non représentée) des composants du tableaux se fait également au travers des câbles 7, composés d'un câble de phase, ou ligne (L) et un câble de neutre (N) et le chauffe-eau est raccordé à la terre par un câble E. Les composants sont raccordés de manière à ce que :
- le disjoncteur deux ampères de protection 2 protège le programmateur 3 d'une surcharge électrique, tout en permettant son alimentation directe depuis l'alimentation électrique externe ;
- le disjoncteur de puissance 4 protège le contacteur de puissance 5 d'une surcharge électrique, tout en permettant son alimentation directe depuis l'alimentation électrique externe ;
- le programmateur 3 commande la commutation du contacteur de puissance 5 afin de laisser, ou non, traverser le courant issu du disjoncteur de puissance 4 vers le chauffe-eau 15.

Le tableau électrique 1 de l'art antérieur a plusieurs inconvénients, d'une part l'ensemble des composants électriques sont disposés à la suite sans logique particulière et sans différenciation des composants de gestion et de puissance, rendant une intervention technique complexe et risquée. D'autre part, les composants de gestion ne sont pas regroupés par fonction et ne sont donc pas facilement identifiables pour chaque corps de métier différent. Enfin, le tableau n'est de manière générale pas présenté de manière intuitive, c'est à dire qu'il est difficile d'identifier chaque composant, borne entrée-sortie, câble... ce qui rend son montage et toute éventuelle intervention ultérieure complexe et requiert un niveau de qualification élevé.

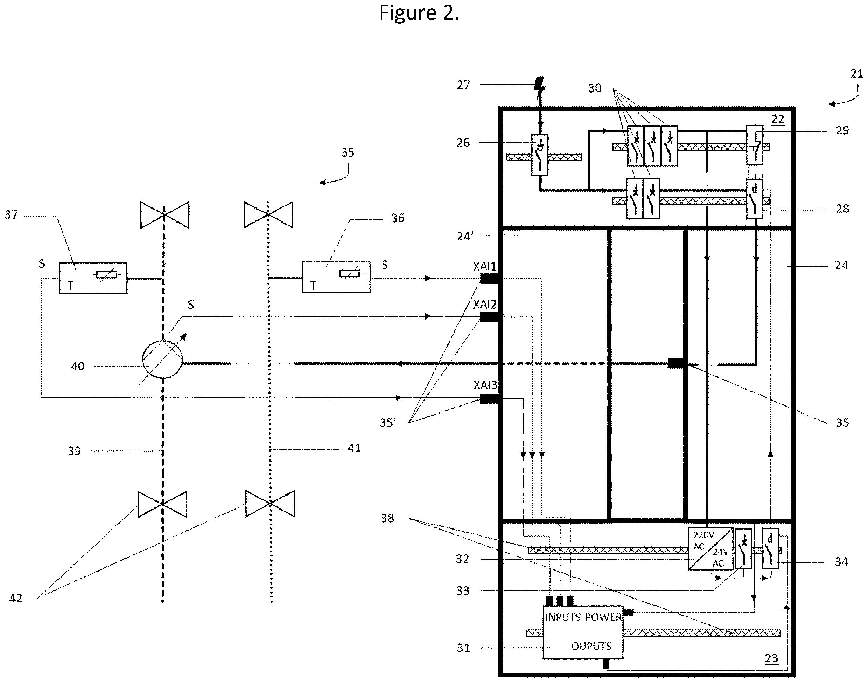

En référence à la figure 2, un tableau électrique 21 selon l'invention pour commande d'une pompe hydraulique 40 dans un circuit de chauffage 35 comprend une cellule de puissance 22 située en haut du tableau, une cellule de gestion 23 située en bas du tableau, deux cellules de raccordements 24 et 24', respectivement situées à droite et à gauche du tableau, entre les cellules de commande 22 et de gestion 23.
La cellule de puissance 22 comprend un sectionneur de tension 26 alimenté par le haut de la cellule via une alimentation électrique externe 27 (étant ici par exemple du 220V alternatif domestique). L'alimentation électrique externe peut-être de tous type connu de l'homme du métier, notamment par exemple du triphasé 3X400V, du monophasé 230V, du monophasé 110V... et pourrait entrer dans la cellule par n'importe quel côté. La cellule de puissance 22 comprend de plus un contacteur de puissance 28 permettant d'acheminer ou non la puissance vers la pompe 40 (sous commande d'une UGMC 31, principe détaillé par après), un relais thermique 29 afin de couper l'alimentation en puissance du contacteur 28 en cas d'échauffement, et un ensemble de disjoncteurs / interrupteurs différentiels 30 protégeant l'installation et les personnes contre les risques de surtension et d'électrisation.

La cellule de gestion comprend une unité de gestion micro contrôlée (UGMC) 31 qui reçoit ici son alimentation électrique (interface « POWER ») en 24V alternatif d'un transformateur 32, ici de 220VAC vers 24VAC. L'alimentation de l'UGMC passe au préalable par un disjoncteur 33 protégeant l'UGMC des surtensions. Le transformateur 32 est lui-même alimenté depuis la cellule de puissance 22. Le transformateur 32 et le disjoncteur 33 pourraient également être placés dans la cellule de puissance 22 mais sont ici dans la cellule de gestion à proximité de l'UGMC pour clarté de lecture. L'UGMC 31 comprend un ensemble d'interfaces entrées-sorties (respectivement « INPUTS » et « OUTPUTS »). Ici, trois entrées analogiques et une sortie numérique sont schématisées. Chaque UGMC (et composants adjacents) ou module nécessaire dans le tableau correspond à une fonction (ici, une seule fonction : le circuit de chauffage). Par fonction il faut ici comprendre le terme précédemment détaillé en milieu de page 10 et exemplifié par le tableau N°1.
Les UGMC utilisées sont des UGMC de marques et modèles bien connus de l'homme du métier et sont standardisés pour chaque fonction. C'est-à-dire qu'en fonction de l'équipement à raccorder, certaines entrées-sorties peuvent ne pas être raccordées. Cela permet ainsi à l'homme du métier de travailler toujours avec les mêmes modules et participe à rendre le tableau électrique plus intuitif.
Les interfaces entrées de l'UGMC 31 sont respectivement connectées à des bornes 35' situés dans la cellule de raccordement 24' liée à la partie gestion du tableau. Les bornes 35' sont connectées à une sonde de température 36 de retour d'eau et une sonde de température 37 de départ d'eau, pour lesquelles l'UGMC 31 reçoit un retour d'information S sous forme d'un signal analogique. Les bornes 35' peuvent être étiquetés (ici XAI1, XAI2 et XAI3 pour bornier X, entrée analogique 1,2 et 3) et de couleurs correspondantes à leur fonction afin de rendre leur branchement plus intuitif. Les connexions d'alimentation des sondes ne sont pas représentées par souci de clarté mais sont évidentes pour un homme du métier.

En fonction du retour d'information S, l'UGMC 31 envoie un signal numérique, via la sortie numérique, à un relais 34, pour que celui-ci laisse passer, ou non, le signal 24VAC du transformateur 32 vers le contacteur 28 situé dans la cellule de puissance afin que celui-ci alimente à son tour, ou non, la pompe 40 en puissance (220VAC) via une borne 35 située dans la cellule de raccordement 24. Tous les composants de l'ensemble des cellules du tableau sont ici montés sur des rails 38. L'installation n'a pas été représentée avec l'entièreté des signaux de retours d'informations vers l'UGMC ou des signaux de commandes et d'alimentation des dispositifs de l'équipement dans un soucis de clarté. Il est possible par exemple que des vannes 42 en entrée et en sortie du circuit de chauffage 35 puissent être commandées par l'UGMC. De même, il également possible que des signaux d'information sur l'état du contacteur 28 et du relais thermique 29 retournent vers l'UGMC.

En fonctionnement, les sondes de températures 36 et 37 de départ et de retour d'eau indiquent à l'UGMC 31 la température d'eau chaude 39 en entrée et d'eau froide 41 en sortie du circuit de chauffage 35. Sur base de ces informations, l'UGMC 31 détermine en fonction de sa programmation interne si la pompe 40 doit être activée ou désactivée, et le cas échéant, envoie un signal vers le contacteur de puissance 28 afin que ce dernier commute et respectivement transmette ou coupe l'arrivée en puissance vers la pompe 40. Par programmation interne, il faut comprendre les exigences de fonctionnement du circuit de chauffage 35 retransmises sous forme d'un programme informatique téléversé dans l'UGMC, par exemple à partir d'un poste de commande centralisé. Ainsi, l'arrivée en chaude dans le circuit de chauffage 35 par la pompe 40 est gérée par le tableau selon l'invention.

L'ensemble des composants électriques représentés ne sont pas exhaustifs et peuvent ne pas être présents, être présent dans une implémentation, ou en nombre différent, suivant les fonctions nécessaires. Ici, seule la fonction « circuit de chauffage » a été représentée mais d'autres fonctions pourraient se trouver également dans le tableau. On différencie alors sur cette base différents modèles de tableaux qui peuvent être regroupés en tableaux mono-fonction ou multifonctions. On pourrait notamment retrouver dans un tableau multifonctions, par exemple, la commande d'un second circuit de chauffage pour lequel une seconde UGMC serait alors ajouté dans la cellule de gestion 23, associés à d'autre composants de « courant for »t et de « courant faible », et qui permettrait la commande de ce second circuit de chauffage.

Par ailleurs, il n'est pas exclu que certains composants électriques particuliers qui pourraient être considérés comme gérant la puissance puissent se trouver dans la cellule de gestion, ou inversement, tant que le régime de courant fort se trouve dans la cellule de puissance et le régime de courant faible dans la cellule de gestion.
De plus, la disposition des cellules et des composants électriques à l'intérieur de celles-ci peut varier en fonction de l'installation. Il est par exemple possible que les cellules de raccordements 24 et 24' soient disposées en haut et en bas du tableau, tandis que les cellules de puissance 22 et de gestion 23 soient disposées à gauche et à droite du tableau.
De manière similaire, les bornes 35 et 35' peuvent être indépendamment disposées vers l'intérieur du tableau (i.e. dans la zone centrale vide située entre les 4 cellules du tableau), ou vers l'extérieur de celui-ci en fonction du branchement le plus commode pour l'homme du métier.
Les connexions entre les bornes 35, 35' et l'UGMC 31 sont ici chacune représentées par un câble effectuant directement la liaison entre ces derniers. Il est toutefois possible que les bornes 35 et 35' soient connectées à un bornier intermédiaire positionné (ici non représenté par soucis de clarté) sur un rail situé dans la logette de raccordement correspondante (respectivement 24 et 24') afin de rendre l'installation ou la fabrication du tableau plus facile et plus intuitive.

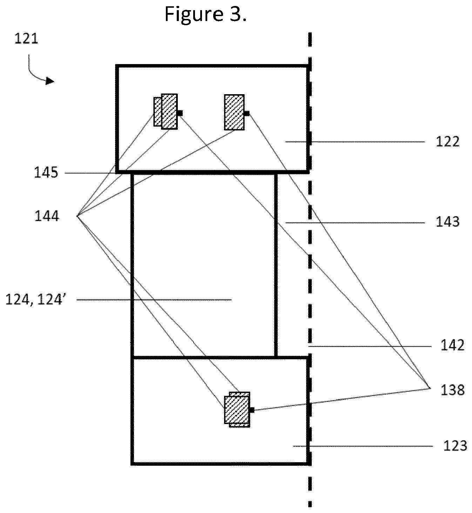

En référence à la figure 3, un tableau électrique 121 selon l'invention peut être prévu pour que les cellules de raccordement 124 et 124' soient moins profondes que les cellules de puissance 122 et de gestion 123 afin que les câbles de connexions sortant du tableau puissent passer dans un espace 143 créé entre les cellules de raccordement 124, 124' et un support 142 sur lequel le tableau 121 est disposé (par exemple un mur). De même, la cellule de puissance 122 du tableau peut être prévue pour être encore plus profonde que la cellule de gestion pour former une protubérance 145 et protéger les cellules de raccordement 124, 124' et de gestion 123 des intempéries. Comme illustré dans la cellule de puissance 122, les composants électriques 144 peuvent également être montés dans la profondeur du tableau, par exemple sur différents rails 138 situés à différentes profondeurs, en plus de pouvoir être montés côte à côte sur un même rail. Cela permet ainsi d'optimiser au mieux l'espace et de rendre l'installation plus pratique et soignée.

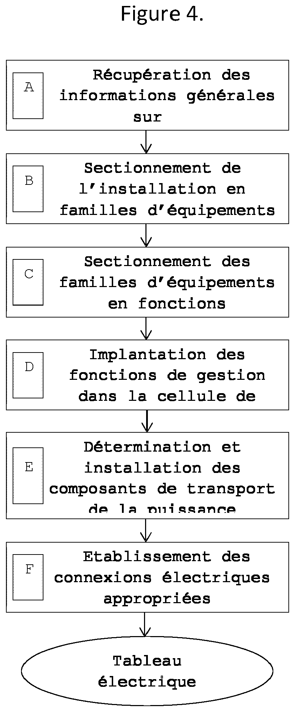

En référence aux figures 2 et 4, il sera maintenant détaillé la méthode de fabrication du tableau de la figure 2.
Tout d'abord, dans une première étape A, on demande au client les informations générales concernant l'installation électrique. Par exemple, on demande la localisation de l'installation (environnement extérieur, cave, locale électrique...), l'alimentation électrique disponible (3x400V + N, 220V monophasé...), le pouvoir de coupure de l'installation (6KA, 25KA, 36kA...), le matériau du tableau souhaité (métal, polycarbonate...), la qualité du projet souhaitée (certification LEED, BREAM, classification du bâtiment...) etc.
Dans une deuxième étape B, on sectionne virtuellement une première fois l'installation en identifiant et en catégorisant les équipements de l'installation par familles d'équipements à raccorder. Dans l'installation électrique de la figure 2, on retrouve uniquement un équipement « circuit de chauffage » 35 issu de la famille « circuits de chauffage » de la colonne de gauche du tableau N°1 familles-fonctions (nomenclature de familles propre au type d'installation).
Dans une troisième étape C, on sectionne virtuellement une seconde fois l'installation électrique en identifiant et en catégorisant les équipements de chaque famille par fonctions des équipements à raccorder. De nouveau, dans l'installation de la figure 2, il n'est représenté qu'un unique équipement « circuit de chauffage » 35 issu de la fonction « circuits de chauffage » de la colonne de droite du tableau N°1 familles-fonctions (nomenclature de fonctions).
Dans une quatrième étape D on sélectionne les composants à implanter pour chaque fonction de gestion et on les agence de façon organisée dans la cellule de gestion du tableau électrique sous forme de modules. Ainsi, dans le tableau de la figure 2, la fonction « circuits de chauffage » est implantée sous la forme de l'UGMC 31 et de ses composants adjacents (le disjoncteur 33, le transformateur 32 et le relais 34) correspondant à un(e) module / fonction.

Dans une étape E, on détermine les composants de transports de la puissance (ou énergie électrique) vers les équipements nécessaires au raccordement des équipements (en respectant notamment les normes de sécurité en vigueur), puis on les installe dans la cellule de puissance. Dans le tableau de la figure 2, il a donc été déterminé puis installé : les disjoncteurs 30, le relais thermique 29, le contacteur 28 et le sectionneur 26.
Enfin, dans une dernière étape F, on établit les connexions électriques appropriées (comme détaillés précédemment pour la figure 2) entre les fonctions de gestion, les composants de transport de l'énergie électrique vers les équipements et les bornes de raccordement des cellules de raccordement.

Toutes les étapes d'implémentation des composants et précâblage peuvent être faites en atelier, avant d'apporter le tableau électrique ainsi préparé sur son site de raccordement. Ce travail peut être hautement automatisé, sur base de schémas simple et donc confié à du personnel non qualifié. Il reste alors, sur site, uniquement à procéder aux raccordements finaux aux bornes de raccordement, sans avoir à intervenir à l'intérieur du tableau.

Les étapes A jusqu'à E, avant l'installation des composants peut avantageusement se faire à l'aide d'un logiciel ou d'une application dédiée. Le logiciel peut être agencé pour proposer les composants en fonction des informations renseignées par un utilisateur. Par exemple, le logiciel ou l'application peut être associée à une interface posant à l'utilisateur des questions selon une séquence précise sur le contenu de l'installation électrique, les équipements à connecter, les distances entre les équipements ou des données métrique liées au plan de l'installation, ... L'utilisateur peut se voir offrir un choix sur les composants, par exemple un choix de marques ou de tarif. Le logiciel ou l'application peut être programmée pour déterminer le diamètre des câbles en fonction des puissances à gérer, le type de force motrice la mieux adaptée (FMDR et/ou FMDB), les couleurs des câbles à utiliser en fonction de l'emplacement des fonctions dans le tableau, les dimensions du tableau et son organisation, i.e., la répartition des composants dans les cellules. Le processus peut ainsi aboutir par exemple au dessin automatique du plan électrique de l'installation et/ou à un devis pour réaliser le(s) tableau(x).
En sortie du procédé informatisé, un opérateur peut se voir fournir la composition d'un tableau à monter, sur mesure. L'opérateur en question n'a alors besoin d'aucune compétence particulière en électricité et le montage peut se faire de façon industrielle. De la même façon qu'un conducteur peut configurer son véhicule en choisissant parmi une multitude d'option, un constructeur peut configurer le(s) tableau(x) électrique(s) de son installation et les faire fabriquer « en usine » ou en atelier » par un opérateur.

L'invention a été expliquée pour un tableau électrique gérant uniquement un circuit de chauffage dans un bâtiment. Toutefois, l'invention ne se limite pas à la gestion d'un unique équipement, d'une unique fonction ou d'une unique famille et peut sur le même principe gérer une installation nettement plus complète. De même, le tableau de sectionnement de l'installation électrique en familles et en fonctions de la page 10 et 11 est présent à titre exemplatif et ne représente pas une version absolue et exhaustive du sectionnement possible de l'installation électrique d'un bâtiment. Il est notamment envisageable de regrouper les familles / fonctions différemment et d'ajouter d'autres familles / fonctions. Enfin, l'invention ne se limite pas à une installation électrique d'un bâtiment et il est concevable de transposer le principe et le tableau électrique décrit ici à tout type d'installation électrique.

L'invention a été illustrée dans un schéma de force motrice directe (FMDR), c'est-à-dire que chaque tableau comprend les composants de sécurité lui permettant de disjoncter (une protection par tableau). Cette configuration est particulièrement lorsque les fonctions sont localisées dans un espace confiné, comme par exemple un local technique, une centrale de traitement d'air, ... La force motrice des fonctions est distribuées directement sur les composants de terrain. Le signal de sécurité et réseau de communication sont distribué au sein du tableau électrique. Cette configuration permet jusqu'à 40% d'économie de longueur de câble.

Néanmoins, selon l'implantation du ou des tableaux, il est également envisageable de travailler en force motrice distribuée (FMDB), c'est à dire qu'un disjoncteur situé en amont de plusieurs tableaux raccordés en série. Cette implantation est particulièrement adaptée lorsque le projet permet de décentraliser les fonctions (puissance et gestion) à proximité des composant de terrains. Dans ce cas, plusieurs tableaux mono-fonction décentralisés sont protégés par un disjoncteur de tête situé dans la fonction maître du réseau de fonctions. Chaque réseau de fonctions doit au moins comprendre une UGMC décisionnel dans lequel sont installé, les éléments de gestion des sécurités, programme horaire... permettant également la communication vers les autres réseaux de fonctions. La force motrice, le signal de sécurité et le réseau de communication, est distribuée de manière sérielle. Cette configuration permet de limiter encore plus la longueur de câble par rapport à un branchement traditionnel, la longueur des câbles étant généralement réduite à 3 m ou moins, ce qui permet de réaliser une économie de câble allant jusque 60%.

L'invention est donc non seulement relative aux tableaux multifonctions tels que décrits plus haut, mais également aux tableaux mono-fonction. Un tel tableau comprend généralement trois cellules uniquement : une cellule de puissance, une cellule de gestion ou commande et une cellule de raccordement.

Ce tableau dit mono-fonction est positionné au plus près de l'élément à gérer. Sa composition est généralement simple puisqu'il ne gère qu'une fonction et il peut avantageusement être fourni déjà équipé de tous ses composants, connectés électriquement de façon adéquate entre eux et aux bornes de la cellule de raccordement. L'installateur peut ainsi placer une série de tableaux pré-équipés, au plus près de l'équipement ou du circuit correspondant à la fonction à gérer.

## Revendications

1. Tableau électrique (21) pour raccorder au moins un équipement (40) à un réseau électrique comprenant :
- une cellule de puissance (22 ; 122) comprenant au moins un composant électrique (26, 28, 29, 30) de transport de l'énergie électrique vers l'équipement,
- si nécessaire, une cellule de gestion (23 ; 123) comprenant au moins un composant électrique (31, 32, 33) de transport d'un signal d'information, et
- au moins une cellule de raccordement (24, 24' ; 124, 124') comprenant des ports (35, 35') de connexion de l'équipement aux composants du tableau lui correspondant.

2. Tableau électrique selon la revendication 1 où la cellule de puissance est séparée de la cellule de gestion.

3. Tableau électrique selon l'une des revendications 1 et 2, comprenant deux cellules de raccordement (24, 24').

4. Tableau électrique selon l'une des revendications 1 à 3, dans lequel les ports de connexion sont placés sur une face latérale de la cellule de raccordement.

5. Tableau électrique selon l'une des revendications 1 à 4, dans lequel les cellules de raccordement (124, 124') sont moins profondes que les autres cellules afin que le tableau puisse être installé sur un chemin de câble passant derrière (143) les cellules de raccordement.

6. Tableau électrique selon l'une des revendications 1 à 5, dans lequel les composants électriques (144) sont implantés dans un ou plusieurs plans superposés dans la profondeur de leur cellule.

7. Tableau électrique selon l'une des revendications 1 à 6, où chaque composant électrique dans le tableau est identifié et/ou un code couleur est attribué aux ports de connexion.

8. Tableau électrique selon l'une des revendications 1 à 7, dans lequel les cellules sont équipées d'un capot agencé en protubérance (145) pour protéger les cellules des chocs et/ou de la pluie.

9. Utilisation du tableau électrique selon l'une des revendications 1 à 7 dans une installation électrique.

10. Procédé de raccordement électrique d'un équipement à un tableau électrique selon l'une des revendications 1 à 8 comprenant les étapes de :
- on raccorde les fonctions de puissance de l'équipement à ses composants de transport de l'énergie électrique situés dans une première zone de puissance d'un tableau électrique,
- on raccorde les fonctions de gestion de l'équipement à ses composants de transport d'un signal d'information situés dans une seconde zone du même tableau électrique, les raccordements s'effectuant via au moins une zone de raccordement distincte des zones de puissance et de gestion.

11. Procédé de raccordement électrique d'un équipement selon la revendication 10 où le tableau électrique se situe à proximité de l'équipement.

12. Procédé de raccordement électrique d'au moins deux équipements, dans un bâtiment, selon lequel les équipements sont raccordés à plusieurs tableaux électriques selon le procédé de la revendication 10.

13. Méthode de fabrication d'un tableau électrique pour raccorder les équipements d'une installation, le tableau électrique comprenant au moins une cellule de puissance, une cellule de gestion et une cellule de raccordement, comprenant les étapes de :
- on détermine (A) les informations techniques nécessaires au raccordement du tableau électrique à l'installation,
- on identifie et on catégorise (B) les équipements à connecter au tableau électrique par famille selon une nomenclature de familles déterminée en fonction du type d'installation pour établir une liste de familles d'équipements à raccorder,
- on identifie (C) les fonctions (ou objets) de gestion des équipements liées à chaque famille de la liste de familles, pour établir une liste de fonctions à raccorder,
- on implante (D) chaque fonction de gestion de façon organisée dans une cellule de gestion du tableau électrique,
- on détermine (E) les composants de transport de l'énergie électrique vers les équipements nécessaires au raccordement des équipements et on les installe dans une cellule de puissance du tableau électrique,
- on établit (F) les connections électriques appropriées entre les fonctions de gestion, les composants de transport de l'énergie électrique vers les équipements et les ports de raccordement compris dans la/les cellule(s) de raccordement.

14. Méthode de fabrication d'un tableau électrique selon la revendication 13 selon laquelle on identifie les fonctions de gestion des équipements liées à chaque famille de la liste de familles selon une nomenclature de fonctions déterminée pour chaque famille, pour établir une liste de fonctions à raccorder.

15. Méthode de fabrication d'un tableau électrique selon l'une des revendications 13 ou 14, où on implante chaque fonction de gestion de façon organisée dans la cellule de gestion du tableau électrique de manière à former des modules, chaque module correspondant à une fonction d'une famille.
